# EUROPÄISCHE PATENTSCHRIFT

(11) **EP 0 963 272 B1**
(45) Veröffentlichungstag und Bekanntmachung des Hinweises auf die Patenterteilung: **16.05.2001**
(21) Anmeldenummer: 98964485.1
(22) Anmeldetag: 04.12.1998
(51) Int. Cl.: B23H 7/06, B23H 7/04

(54) **VERFAHREN FÜR DIE ELEKTROEROSIVE BEARBEITUNG EINES WERKSTÜCKS SOWIE ENTSPRECHENDE VORRICHTUNG**
METHOD FOR ELECTROEROSIVE MACHINING OF A WORK PIECE AND A CORRESPONDING DEVICE
PROCEDE POUR L'USINAGE ELECTRO-EROSIF D'UNE PIECE, AINSI QUE DISPOSITIF CORRESPONDANT

(30) Priorität: 04.12.1997 DE 19753812
(43) Veröffentlichungstag der Anmeldung: 15.12.1999
(73) Patentinhaber: AGIE SA, 6616 Losone (CH)
(72) Erfinder: ANGELELLA, Stefano, CH-6572 Quartino (CH); D'AMARIO, Rino, CH-6807 Taverne (CH)
(74) Vertreter: Lippich, Wolfgang, Dipl.-Pys., Dr.rer.nat.
(86) Internationale Anmeldenummer: EP9807889
(87) Internationale Veröffentlichungsnummer: WO9929460

(56) Entgegenhaltungen:
- EP-A- 0 067 229
- FR-A- 2 427 167
- PATENT ABSTRACTS OF JAPAN vol. 003, no. 134 (M-079), 9. November 1979 -& JP 54 109698 A (INOUE JAPAX RES INC), 28. August 1979

## Beschreibung

Die Erfindung betrifft ein Verfahren und eine Vorrichtung für eine möglichst genaue funkenerosive Bearbeitung eines Werkstückes mittels einer Drahtelektrode.

Zweck der Erfindung ist, bekannte elektroerosive Bearbeitungsverfahren mit kurzen Impulsen und kleinen Stromstärken dahingehend zu verbessern, dass ausser einer hochwertigen Oberflächengüte auch eine sehr genaue Bearbeitung ermöglicht wird.

Eine Senk- oder Drahterosionsbearbeitung ist heute schon mit einer ausgezeichneten Oberflächengüte von Rₐ kleiner als 0.1*µ*m und bei einer Materialbeeinflussung der Oberfläche mit einer Tiefe von weniger als 1*µ*m Stand der Technik. Solche Bearbeitungen setzen Generatoren voraus, welche monopolare oder bipolare Impulse im Megahertzbereich mit Stromstärken von einigen Ampere bei welchen, während der Bearbeitung die elektrostatischen Kräfte F_{E} und die Erosionskräfte F_{P} (Plasmakräfte) in der gleichen Grössenordnung liegen.

Es ist bekannt, bei einer funkenerosiven Bearbeitung während zusätzlich erzeugten periodischen Pausen zwischen Impulsgruppen, den elektrischen Widerstand des Funkenspaltes mit Hilfe einer Mess- Stromquelle zu ermitteln und damit den Servoantrieb, die Spülvorrichtung und den Generator zu steuern (CH 650 433). Dieses Verfahren hat die Aufgabe aus dem elektrischen Widerstand den Verschmutzungsgrad sowie Entladungskonzentrationen bei einer Senkbearbeitung zu ermitteln, und anhand dieser Werte den Prozess so zu regeln, dass eine höhere Abtragsleistung bei unbeaufsichtigtem Betrieb erreicht wird.

Die Druckschrift JP-A-54 109698 schlägt vor, die Bearbeitungsgenauigkeit dadurch zu erhöhen, dass die Impulsfrequenz auf Schwingungen der Drahtelektrode abgestimmt wird.

Die Druckschrift FR-A-2 427 167 schlägt vor, Auslenkungen der Drahtelektrode durch Änderungen der Zugspannung des Drahtes während des Erosionsbetriebs zu erfassen und die Erosionsparameter so zu steuern, dass Drahtauslenkungen verringert werden.

Es ist Aufgabe der Erfindung, die funkenerosive Bearbeitung und insbesondere die funkenerosive Feinbearbeitung so zu verbessern, dass eine möglichst hohe Formtreue am Werkstück erreicht werden kann. Beim Nachschneiden mit Drahtelektroden sollen Formtoleranzen, Eckenfehler und Vertikalprofile von besser als 1*µ*m erreicht werden. Beim Vollschnitt mit Feindrähten im Bereich von 100*µ*m bis 10*µ*m Durchmesser soll trotz hoher Abtragsleistung eine bedeutend bessere Formtoleranz erreicht werden.

Diese Aufgabe wird durch die in den Ansprüchen 1 und 13 definierten Merkmale gelöst. Vorteilhafte Weitergestaltungen sind in den abhängigen Ansprüchen beschrieben.

Die Vorteile der Erfindung bestehen insbesondere darin, dass jede Auslenkung der Drahtelektrode aus der Ruhelage genauestens erfasst und so ausgeregelt werden kann, dass die Drahtelektrode während der Erosion praktisch gerade ist. Damit wird der Erosionsprozess im Mikrometerbereich kontrollierbar.

Weiter ist von Vorteil, dass die Technologiewerte, d.h. die Gesamtheit aller Einstellparameter für eine spezifische Arbeit, in viel kürzerer Zeit ermittelt werden können, da nicht mehr auf viele Interdependenzen Rücksicht genommen werden muss.

Zudem ist die zusätzliche Investition im Vergleich zum Nutzen gering und es ist sogar möglich, bereits bestehende Anlagen nach diesem Konzept nachzurüsten.

Weitere Vorteile der Ausgestaltung der Erfindung ergeben sich aus der nachfolgenden Beschreibung bevorzugter Anführungsbeispiele.

In der Beschreibung wird Bezug auf die schematischen Figuren genommen.
Es zeigen:
- Fig. 1a, 1b: zwei Varianten des Grundkonzepts der Erfindung am Beispiel einer Drahtschneidemaschine;
- Fig. 2a, b, c: drei verschiedene Situationen bei der Bearbeitung mit einer Drahtschneidemaschine;

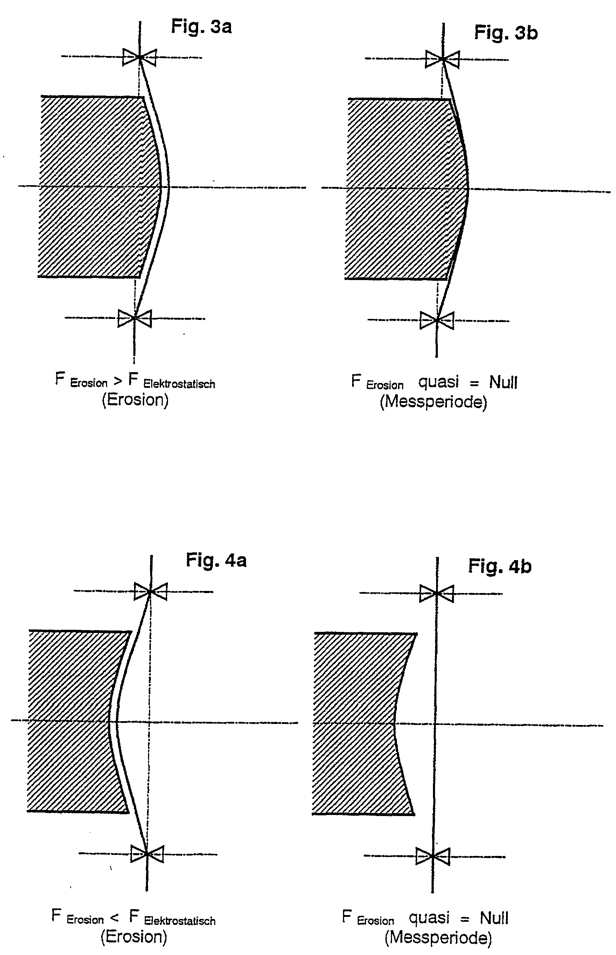

- Fig. 3a, b: konvexes Werkstückprofil durch unzureichendem Materialabtrag;
- Fig. 4a, b: konkaves Werkstückprofil durch übermässigem Materialabtrag;
- Fig. 5a-5i: drei typische Situationen der Erosion, der Funkenstreckenspannung als Funktion der Drahtauslenkung und den Verlauf der Zündverzögerungszeit;
- Fig. 6a, 6b: den zeitlichen Verlauf der Funkenstrecken-spannung Signale in Fig. 1 in zwei verschiedenen Zeitmassstäben;
- Fig. 6c-6f: den zeitlichen Verlauf der Funkenstrecken-spannung und des Stromes für Kurzschluss-, Normal- und Leerlaufsignale samt zugehöriger logischer Kurzschluss- und Leerlaufsignale;
- Fig. 7a: die Kräfte am Draht während der Feinbearbeitung (F_{P} ≈ F_{E}; F_{R} ≈ 0) ;
- Fig. 7b: die Kräfte am Draht während des Vollschnitts (F_{P} = F_{E} + F_{R}).

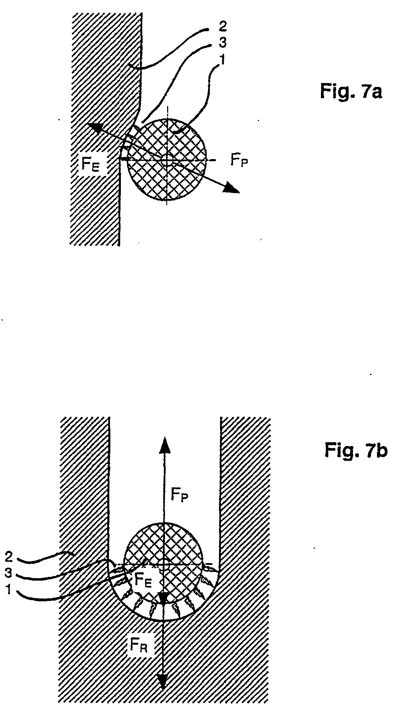

Bekanntlich sind die elektrostatische Kraft, die Kraft des Plasma und die Rückstellkraft wie sie anhand der Figur 7 dargestellt werden können, die wesentlichen Kräfte die im Erosionsprozess mitwirken. Die elektrostatische Kraft F_{E} ist dem Kondensator-Effekt der Anordnung Elektrode-Werkstück zuzuschreiben. Diese Kraft ist proportional zum Quadrat der Spannung und nimmt mit zunehmender Spaltbreite ab. Die elektrostatische Kraft ist immer anziehend. Die Kraft des Plasma F_{P} entsteht aufgrund des Drucks des Dielektrikumdampfes welcher im Arbeitsspalt herrscht, und auf die Elektrode einwirkt. Die Kraft des Plasma ist immer abstossend. Schliesslich die Rückstellkraft F_{R}, welche auf die mechanische Drahtspannung zurückzuführen ist. Diese bringt die Elektrode in die neutrale Ruhelage. Sie ist mal anziehend, mal abstossend, in Abhängigkeit der Auslenkungsrichtung der Elektrode aus der neutralen, im Bezug auf den Prozess spannungsfreie Lage.

Alle weiteren bekannten Kräfte (siehe R. Panschow "Über die Kräfte und ihre Wirkungen beim elektroerosiven Schneiden mit Drahtelektrode", Dissertation, Technische Universität Hannover, 1974) sind wesentlich kleiner. Bei der Feinbearbeitung, z.B. beim Nachschneiden in der Drahterosion haben diese Kräfte praktisch keine Bedeutung.

Fig. 7a veranschaulicht die Kräfte am Draht während der Feinbearbeitung. Mit Hilfe der Erfindung wird erzielt, dass die Kraft des Plasma F_{P} ungefähr gleich der elektrostatischen Kraft F_{E} ist, also die Rückstellkraft F_{R} praktisch verschwindet (d.h. der Draht annähernd gerade ist). Fig. 7b veranschaulicht den Fall eines Vollschnitts, bei dem zur Erzielung einer grossen Schnittgeschwindigkeit kein Gebrauch von der Erfindung gemacht wird, der Draht also i.a. gebogen ist. Die Kraft des Plasma F_{P} ist hier gleich der Summe von elektrostatischer Kraft F_{E} und Rückstellkraft F_{R}. Es ist aber ebenso möglich, die Erfindung auch beim Vollschnitt einzusetzen, so dass auch hier die Kraft des Plasma F_{P} ungefähr gleich der elektrostatischen Kraft F_{E} wird. Also verschwindet die Rückstellkraft F_{R} praktisch, der Draht ist dann annähernd gerade. Dies verlangt zwar eine geringere Schnittgeschwindigkeit; durch die Möglichkeit, den anschliessenden Feinschnitt wegen der nun nicht mehr vorhandenen Drahtbiegung entfallen zu lassen, kann aber insgesamt die Bearbeitungszeit verkürzt werden.

Im stationären Betrieb, d.h. wenn die wesentlichen im Erosionsprozess wirkenden Kräfte viel häufiger variieren als die Resonanzperiode der Elektrode, wird die Lage der Elektrode vom zeitlichen Mittel, der Vektorsumme dieser Kräfte bestimmt. Folglich ist auch das Bearbeitungsergebnis, insbesondere die Formgenauigkeit des Werkstücks von der Resultierenden der Kräfte abhängig.

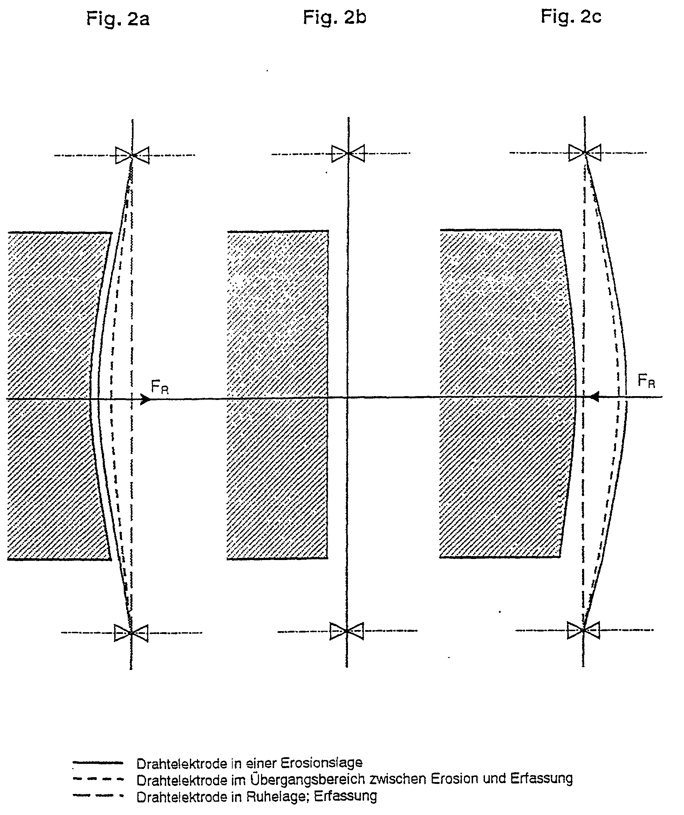

Durch Änderung der erosionstypischen Generatorparameter (Impulsspannung, Entladestrom, Impulsfrequenz, usw. ...), ist es auf Drahterodiermaschinen möglich, ein "gebauchtes" Vertikalprofil am Werkstück zu erzeugen und trotzdem stabil zu erodieren. Das Vertikalprofil am Werkstück kann z.B. für eine Werkstückhöhe von 50mm im Bereich von etwa -25 *µ*m (konkaves Vertikalprofil) bis +15 *µ*m (konvexes Vertikalprofil) beeinflusst werden (siehe Fig. 2).

Wie bereits einleitend aufgeführt ist eine der Hauptanforderungen bei der drahterosiven Feinbearbeitung, eine möglichst niedrige Endrauhigkeit zu erreichen (Rₐ ≤ 0.1 *µ*m) Dieses Ergebnis kann mit sehr hohen Impulsfrequenzen und sehr kleinen Impulsbreiten erreicht werden. Die vorangehende Aussage betreffend Beeinflussung des Vertikalprofils gilt auch dann, wenn die Erodieranlage im Hochfrequenzbetrieb arbeitet.

Eine weitere Hauptanforderung bei der drahterosiven Feinbearbeitung ist es, am Schluss der Bearbeitung, d.h. nach dem letzten Schlichtbearbeitungsschritt eine Formgenauigkeit in der Grössenordnung eines Mikrometers zu erhalten.

Es ist eine intrinsische Eigenschaft der Erosion, dass das Material, besonders in den ersten Arbeitsschritten, in Ecken und in engen Kurven inhomogen abgetragen wird. Der Erosionsprozess muss deshalb entsprechend geregelt werden. Dazu ist ein zuverlässiger Anhaltswert erforderlich, der ein Mass für die augenblicklich abzutragende Materialmenge liefert.

Die bisher für die Erosion im Hochfrequenzbetrieb verwendeten Messgrössen haben sich diesbezüglich jedoch als ungeeignet erwiesen, insbesondere bei kritischen Situationen wie rapide und starke Richtungsänderungen. Dort wo man diesen Anhaltswert eben am ehesten benötigt hat man eine allzu starke Abhängigkeit von den lokalen Geometrieverhältnissen festgestellt.

Hingegen stellt der Betrieb der Erosionsanlage mit relativ niedrigen Impulsfrequenzen für die Erfassung eines Anhaltswertes, z.B. der Zündverzögerungszeit T_{d} keine besonderen Probleme. Gemäss den bisherigen Bearbeitungsstrategien werden folglich die Qualitätsziele Formgenauigkeit und Rauhigkeit nacheinander erreicht. Die Bearbeitungsfolge ist nämlich so gegliedert, dass zuerst in einem oder mehreren Arbeitsschritten eine hohe Formgenauigkeit mit einer Regelung im Niederfrequenzbetrieb erzielt wird, und dann im Hochfrequenzbetrieb und bei konstanter Vorschubgeschwindigkeit die Endrauheit erreicht wird.

Ein Ziel der vorliegenden Erfindung ist die Reduktion der Geamtbearbeitungszeiten, indem die Qualitätsziele Formgenauigkeit und Rauhigkeit gleichzeitig erreicht werden. Dieses Ziel wird durch eine durch geeignete Einstellung der Generatorparameter erreicht, wobei diese Einstellung auf einer Messung beruht, welche Auskunft über die Richtung der momentanen Drahtauslenkung und der in der Folge abzutragenden Materialmenge gibt.

Wie die Erfassung der momentanen Auslenkungsrichtung der Drahtelektrode erfolgt, wird nachstehend beschrieben:

Der stationäre Erosionsprozess im Hochfrequenzbetrieb wird in zyklischen Abständen plötzlich unterbrochen, wodurch die Erosionskräfte fallen und nur noch die zuvor beschriebene Rückstellkraft F_{R} wirkt. Dadurch bewegt sich die Elektrode in eine neue Gleichgewichtslage, wobei die Drahtelektrode in Eigenschwingung gerät. Damit diese Erfassung zuverlässig ist, muss die Zeit, in der die Elektrode von Prozesskräften befreit wird, von derselben Grössenordnung der halben Periode der Drahtschwingung sein.

Wenn die Drahtelektrode während der Erosion eine stabile konkave Auslenkung gegenüber der Vertikalen hat (konvexes Vertikalprofil des Werkstücks), dann bewegt sich diese nach Unterbrechung der Erosionsimpulse in Richtung des Werkstücks. Die nächstfolgenden Erosionsimpulse stellen dann sofort eine Kurzschlusssituation fest, wodurch mit Hilfe einer sog. Servo-Regelung für den Drahtvorschub die Vorschubgeschwindigkeit sofort reduziert wird.

Wenn die Drahtelektrode hingegen während der Erosion eine stabile konvexe Auslenkung gegenüber der Vertikalen hat (konkaves Vertikalprofil des Werkstücks), dann bewegt sich diese nach Unterbrechung der Erosionsimpulse vom Werkstück weg. Die nächstfolgenden Erosionsimpulse stellen dann sofort eine Leerlaufsituation fest, wodurch die Vorschubgeschwindigkeit sofort erhöht wird.

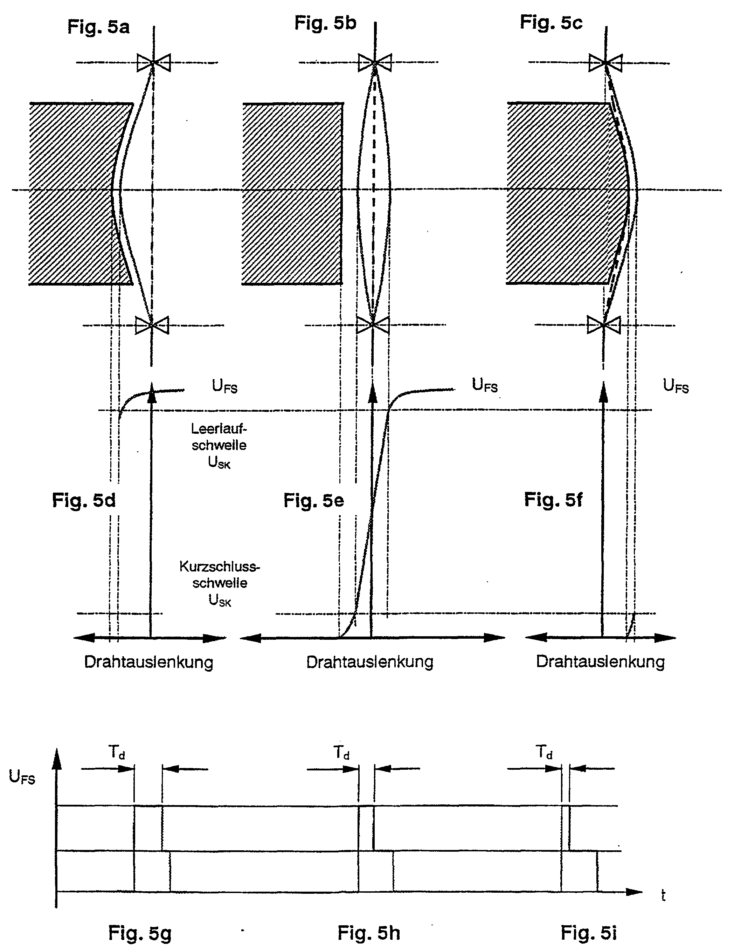

In der Praxis sind also nur drei Situationen möglich, nämlich: Kurzschluss, Leerlauf oder eben ein praktisch optimaler Bereich, in dem eine sehr gute Vertikalität der Drahtelektrode vorliegt. Die Betrachtung dieser einen Grösse ist ausreichend, um die mittlere Vorschubgeschwindigkeit V_{S} der Achsen zu bestimmen (Fig. 5a - 5i)

Wenn die Erosionsparameter mit einer im wesentlichen geraden Drahtelektrode einmal festgelegt sind, dann sind eventuell noch Anpassungen der Vorschubgeschwindigkeit aufgrund der zuvor erzeugten Geometriefehler, welche prozessbedingt intrinsisch auftreten vorzunehmen.

Die Zündverzögerungszeit T_{d} hat sich als zuverlässiger Parameter zur Regelung der Vorschubgeschwindigkeit erwiesen.

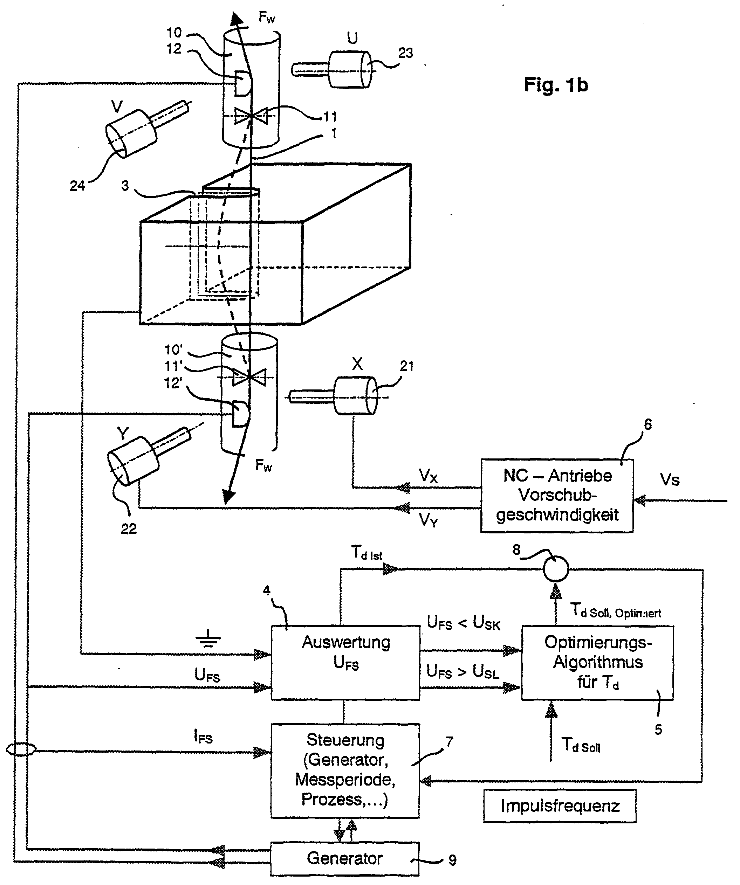

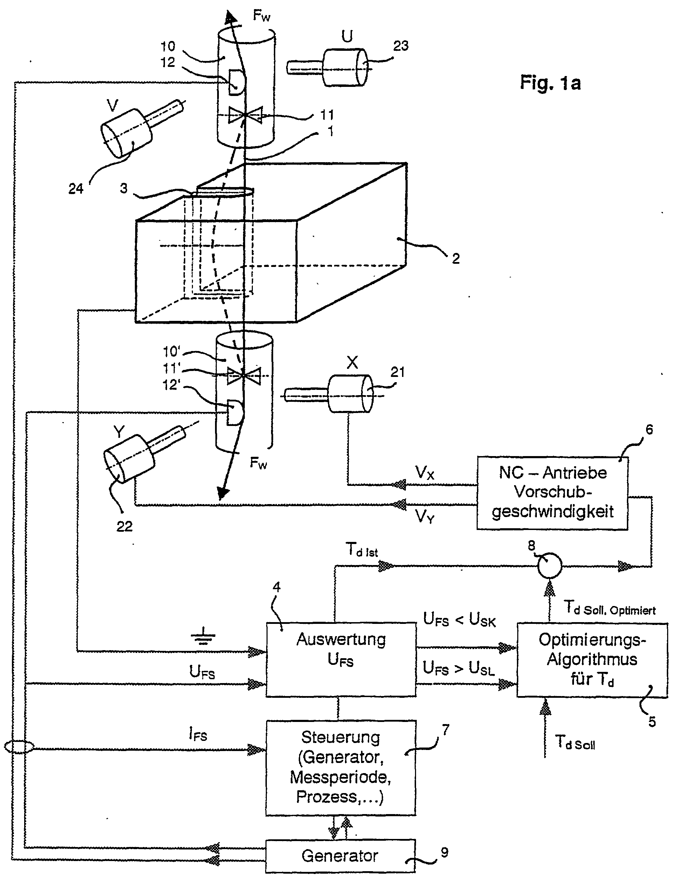

In den Figuren 1a und 1b ist das Grundkonzept für eine Drahtschneidemaschine nach der Erfindung gezeigt. Das Funkenstreckensignal F wird hier von einem unteren Führungskopf 10' abgenommen, kann aber natürlich auch auf dem oberen Führungskopf 10 bzw. direkt von der Elektrode 1 abgenommen werden.

Verschiedene Komponenten sind hier nicht gezeichnet, da sie für das Verständnis der Funktionsweise nicht relevant sind.

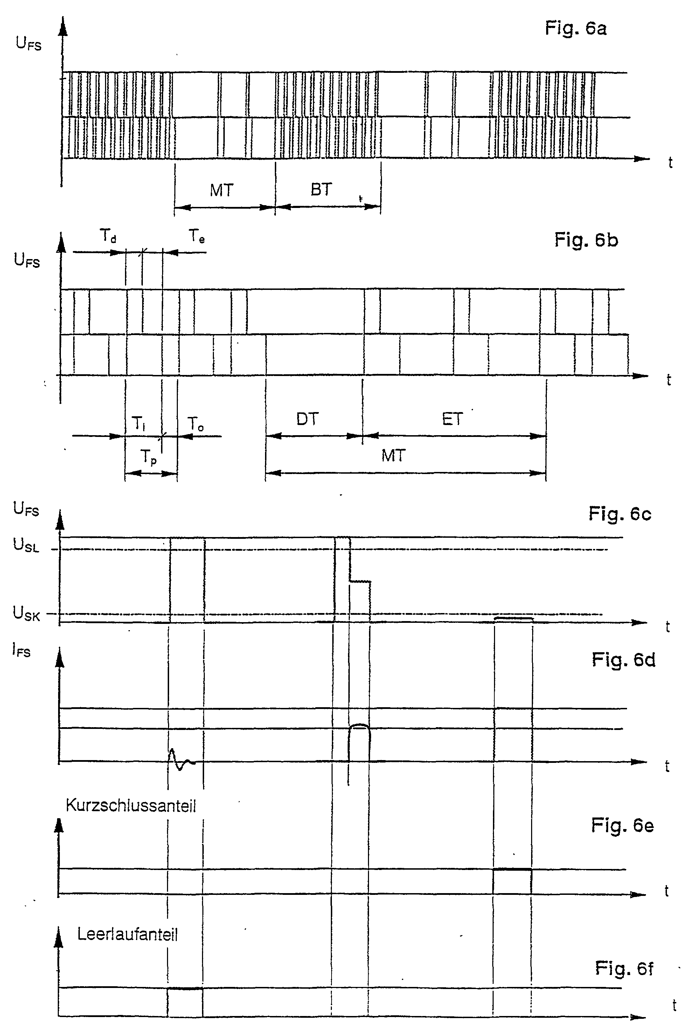

Aus Fig. la ist das Verfahren zur Auswertung der Funkenstreckenspannung U_{FS} ersichtlich. Eine Auswerteeinheit 4 bestimmt, wieviel % der Messzeit MZ die Funkenstrecken-spannung U_{FS} im Durchschnitt eine definierte Kurzschluss-Schwellenspannung U_{SK} (z.B. 5% der Leerlaufspannung) unterschreitet, und klassiert diese als Kurzschluss. Sie bestimmt weiter, wieviel % der Messzeit MZ die Funkenstreckenspannung U_{FS} im Durchschnitt eine definierte Leerlauf-Schwellenspannung U_{SL} (z.B. 90% der Leerlaufspannung) überschreitet, und klassiert diese als Leerlauf (s. Fig. 6c-6f).

Die Funkenstreckenspannung U_{FS} dient der Auswerteeinheit 4 ebenfalls zur Ermittlung eines Funkenstreckensignals F (z.B. die Zündverzögerungszeit T_{d} oder die Mittlere Funkenstreckenspannung). In der Folge der Beschreibung wird die Zündverzögerungszeit T_{d} vorgezogen (Fig. 6b).

Der Sollwert der Zündverzögerungszeit T_{d} soll wird vorerst aus der Technologie-Datenbank entnommen. Zu Beginn der Erosion dient dieser Sollwert der Zündverzögerungszeit zur Vorschubsregelung. Im Verlauf der Erosion wird dieser Sollwert durch eine Optimierungseinheit 5 modifiziert, der so entstehende Wert heisst Optimierter Sollwert T_{d soll, Optimiert} (wird weiter unten erläutert).

Auf der Grundlage eines Vergleichs von gemessener Zündverzögerungszeit T_{d ist} und T_{d soll} bzw. T_{d soll, Optimiert} führt ein Servoregler mit Vergleicher 8 die Vorschubbewegungen der Drahtelektrode 1 relativ zum Werkstück 2 über die Antriebsachsen (X, Y) und/oder weitere Antriebsachsen (Z, U, V, A, B, C...) aus, und zwar mit Hilfe von numerisch gesteuerten Antrieben 6. Falls T_{d ist} kleiner als T_{d soll} bzw. T_{d soll, Optimiert} ist, wird die Vorschubgeschwindigkeit vergrössert, und umgekehrt.

Eine Steuereinheit 7 steuert den Generator 9 zur Erzeugung der Erosionspulse. Er erhält hierzu Signale von der Auswerteeinheit 4 sowie Messwerte des Funkenstreckenstroms I_{FS}.

Anhand der Fig. 2 werden drei verschiedene Situationen während der Bearbeitungszeit und während der Messzeit bei einer Drahtschneidemaschine erklärt.

Es sind drei Szenarien (a, b, c) in vertikalem Schnitt durch das Werkstück 2, die Elektrode 1 und einem oberen und unteren Führungskopf 10, 10' dargestellt.

Es ist angenommen, dass ein Präzisionsschnitt oder Präzisionsnachschnitt des Werkstücks 2 durch Feinbearbeiten mit einer verlangten Oberflächengüte und Rauheit (z.B. Rₐ = 0.1*µ*m) durchgeführt werden soll. Mangels signifikanter Eingangsgrössen führt man im Stand der Technik üblicherweise die Werkstückkontur mit einer konstanten, auf gespeicherten Technologiedaten beruhende Servogeschwindigkeit ab.

Szenario a zeigt die Bearbeitung z.B. einer Aussenecke des Werkstückes 2 oder eine Zone, wo mit den Vorschnitten, Fehler in Form von zu grossem Materialabtrag verursacht wurden. Das Interessante ist nun, dass die herkömmliche Funkenbearbeitung in diesen Zonen nicht wie erwartet, infolge Leerlauf vermindert wird, sondern aufgrund der Elektrostatischen Kräfte F_{E} mit grosser Stabilität aufrechterhalten bleibt. Die Drahtelektrode hat dadurch die Tendenz dem Profil zu folgen.

Szenario b zeigt die Bearbeitung z.B. auf einer Geraden der Kontur, wo die Vorschnitte keine Fehler hinterlassen haben. Nur in diesem Fall bringt ein Verfahren nach dem Stand der Technik akzeptable Resultate für die Genauigkeit.

Szenario c schliesslich zeigt z.B. die häufig auftretende Bearbeitung einer Innenecke der Kontur oder Stellen, wo zuviel Material infolge Fehler der Vorschnitte auf dem Werkstück 2 belassen wurde. Hier lenkt sich die Elektrode 1 bis etwa 10*µ*m vom Werkstück weg. Bekannte Servosysteme würden im bestem Fall die Geschwindigkeit nur zur Einhaltung des Sollwertes unwesentlich reduzieren und die Konvexes Geometrie mangels Information nicht korrigieren.

Bei allen drei Szenarien herrscht im Stand der Technik stabile Erosionsbearbeitung vor, und man kann keinerlei Information gewinnen, um den oft immer grösser werdenden Fehlern entgegenzuwirken.

Hier **setzt nun die Erfindung an**, indem man die Erosionsimpulse zyklisch unterbricht, und in einer Erfassungszeit ET (Fig. 6a, 6b) die Elektrode 1 **selber zyklisch abtasten lässt**, wieviel Material wirklich abzutragen ist und den Vorschub so anpasst, dass dieses Material mit praktisch **geradliniger Elektrode** abgetragen wird. Die normale Bearbeitung vor der jeweiligen Unterbrechung findet während einer Bearbeitungszeit BT mit relativ hoher Pulsfrequenz statt. Die Erfassungszeit ET setzt sich zusammen aus einer Verzögerungszeit DT, in der keine Spannung anliegt, und einer Messzeit MT, in der zum Beispiel Impulse der gleichen Höhe wie die Bearbeitungsimpulse, aber mit verringerter Pulsfrequenz (z.B. mit der 0.05-0.8fachen Frequenz) anliegen. Die Verzögerungszeit erlaubt dem Draht 1, sich in Richtung Ruhelage zu bewegen. Die Pulse während der Erfassungszeit ET erlauben der Vorrichtung, die nun vorliegende Rückstellbewegung auszutasten.

Die Figuren 5g bis 5i, sowie die Figuren 6c bis 6f zeigen den möglichen Verlauf der Zündverzögerungszeit T_{d}, des Kurzschlussanteils und des Leerlaufanteils der Pulse während der Erfassungszeit ET.

Die Regelung des Vorschubes wird so ausgelegt, dass der Fall eines nicht aus der Ruhelage ausgelenkten Drahts 1 (Fig.5 b, e, h) angestrebt wird.

In diesem Fall haben wir Gleichgewicht der elektrostatischen Kräfte F_{E} und der Erosionskräfte (Plasmakräfte) F_{P}. Dieses Gleichgewicht der elektrostatischen Kräfte und der Erosionskräfte kann für jeden einzelne Impuls oder für einen Anzahl nacheinander folgenden Impulse eintreten. Wird das Gleichgewicht für eine Impulsfolge gewährleistet, dann muss die Periode der Folge eine Grössenordnung kürzer sein als die Schwingperiode der Drahtelektrode.

Zur Erzielung des Kräftegleichgewichts verändert (optimiert) die Optimierungseinheit 6 den aus den Technologiedaten gewählten Sollwert der Zündverzögerungszeit T_{d soll} mittels einem Optimierungsalgorithmus so, dass die stochastisch immer auftretenden Anteile der Kurzschlüsse (U_{FS} < U_{SK}) und der Leerläufe (U_{FS} > U_{SL}) während die Erfassungszeit ET so klein wie möglich werden. Und zwar vergrössert sie bei einem zu grossen Kurzschlussanteil den Sollwert der Zündverzögerungszeit, was zu einer Verringerung der Vorschubgeschwindigkeit führt. Umgekehrt wird bei einem zu grossen Leerlaufanteil der Sollwert der Zündverzögerungszeit verkleinert, was zu einer Vergrösserung der Vorschubgeschwindigkeit führt. Hierdurch wird die Drahtauslenkung aus der Ideallage von Fig.5 b,e,h minimal.

An dieser Stelle sei vermerkt, dass eine Bearbeitung mit Unterbrechungszeiten für Messzwecke nicht zwangsläufig zu einer Leistungseinbusse führt. Für die Belastung der Elektrode ist nämlich die mittlere Leistung massgebend, den zeitlichen Verlust kann man z.B. durch eine Erhöhung der Frequenz der Bearbeitungsimpulse des Generators kompensieren.

Für die entsprechende Steuerung des Generators 9 sorgt die Steuereinheit 7. Und zwar veranlasst sie den Generator 9, zyklisch die Pulsfolge der Bearbeitungszeit BT zu unterbrechen, und in den eingeschobenen Messzeiten zunächst während der Verzögerungszeit DT keine Pulse und anschliessend, während der Erfassungszeit ET Pulse mit verringerter Pulsfrequenz anzulegen, wie in Fig. 6a, 6b gezeigt. Ausserdem gibt die Steuereinheit 7 der Auswerteeinheit 4 entsprechende Signale, so dass diese die Auswertung der Funkenstreckenspannung U_{FS} mit der Erfassungszeit ET oder ggf. den in dieser Zeit anliegenden Pulsen synchronisieren kann.

Fig.1b zeigt eine weitere Variante der Erfindung bei der als Stellgrösse für die Regelung des Prozesses nicht die Vorschubgeschwindigkeit, sondern die Impulsfrequenz der Bearbeitungspulse während der Bearbeitungszeit BT dient. Hier werden aus der vorgespeicherten Technologiewerten die Impulsparameter, die Vorschubgeschwindigkeit V_{S} sowie einen Anfangswert für die Impulsfrequenz gewonnen; der Erosionsprozess wir durch Veränderung dieser Frequenz geregelt. Für die Regelung der Impulsfrequenz gilt das oben Gesagte, mit der Massgabe, dass anstelle einer Erniedrigung (bzw. Erhöhung) der Vorschubgeschwindigkeit eine Erhöhung (bzw. Erniedrigung) der Impulsfrequenz tritt. Die Optimierung des Sollwerts der Zündverzögerungszeit T_{d soll} erfolgt auch hier gemäss den obigen Ausführungen.

Fig. 6c bis 6f zeigen - wie oben bereits erwähnt - schematisch den möglichen zeitlichen Verlauf der Funkenstrekkenspannung während der Messzeit sowie die Art der Auswertung d.h. die Definition der Kurzschlusszeit und der Leerlaufzeit und der Zündverzögerungszeit.

### Bezugszeichenliste

- 1: Drahtelektrode
- 2: Werkstück
- 3: Abstand Drahtelektrode-Werkstück (Arbeitsspalt)
- 4: Auswerteeinheit
- 5: Optimierungseinheit
- 6: Antriebe
- 7: Steuereinheit
- 8: Vergleicher
- 9: Pulsgenerator
- 10,10': Drahtführungskopf
- 11,11': Drahtführung
- 12,12': Stromzuführung
- 21: X-Achsenantrieb
- 22: Y-Achsenantrieb
- 23: U-Achsenantrieb
- 24: V-Achsenantrieb
- BT: Bearbeitungszeit
- ET: Erfassungszeit
- MT: Messzeit
- DT: Verzögerungszeit
- Tₚ: Periodendauer
- Tᵢ: Impulsdauer (Impulsbreite)
- T_{O}: Pausendauer
- Tₑ: Entladedauer
- Td: Zündverzögerungszeit
- F: Funkenstreckensignal
- I_{FS}: Funkenstreckenstrom
- U_{FS}: Funkenstreckenspannung
- U_{SK}: Kurzschluss-Schwellspannung
- U_{SL}: Leerlauf-Schwellspannung
- V_{S}: Vorschubgeschwindigkeit
- V_{X} ,V_{X}: Vorschubgeschwindigkeit X bzw. Y
- F_{E}: Elektrostatische Kraft
- F_{P}: Erosionskraft (Plasma-Kraft)
- F_{R}: Rückstellkraft
- F_{W}: Zugspannung

## Patentansprüche

1. Verfahren für die elektroerosive Bearbeitung eines Werkstücks (2) mittels einer Drahtelektrode (1) in einem möglichst genauen Bearbeitungsprozess, dadurch gekennzeichnet, dass:
- die Bearbeitung intermittierend erfolgt, wobei die Erosionsimpulse jeweils während Bearbeitungszeiten (BT) an den Arbeitsspalt (3) angelegt werden, und während dazwischen liegender Messzeiten (MT) Erosionsimpulse mit einer derart niedrigen Wiederholungsfrequenz angelegt werden, dass
- die Drahtelektrode durch die rückführende Wirkung der Drahtspannung F_{W} während der Messzeit (MT) in seine Ruhelage strebt, und dass
- etwaige Auslenkungen der Drahtelektrode aus der Ruhelage, die während der vorausgegeangenen Bearbeitungszeit (BT) gegebenenfalls vorhanden waren, im Mikrometerbereich erfasst werden können, und
- hierauf beruhend der Bearbeitungsprozess geregelt wird.

2. Verfahren nach Anspruch 1, dadurch gekennzeichnet, dass die Änderungen der Auslenkung der Drahtelektrode (1) erfasst werden, indem jeweils während der Messzeit (MT) durch die Auswertung des Funkenstreckensignals (F) ein Mass für die Änderungen des Abstands Drahtelektrode-Werkstück gewonnen wird, und daraus die Regelung des Erosionsprozesses erfolgt.

3. Verfahren nach Anspruch 2, dadurch gekennzeichnet, dass das Funkenstreckensignal (F) die mittlere Zündverzögerungszeit T_{d} oder die mittlere Funkenstrecken-spannung U_{FS} ist.

4. Verfahren nach einem der Ansprüche 1 bis 3, dadurch gekennzeichnet, dass die Erfassungszeit (ET) mit der Messzeit (MT) synchronisiert ist, und der Beginn der Erfassungszeit um eine Zeit (DT) verzögert wird, so dass die Drahtelektrode (1) eine Bewegung in Richtung ihrer Ruhelage begonnen hat.

5. Verfahren nach einem der Ansprüche 2 bis 4, dadurch gekennzeichnet, dass die Erosionsimpulse in der Erfassungszeit (ET), deren Funkenstreckenspannung U_{FS} eine definierte Kurzschluss-Schwellspannung U_{SK} unterschreitet, als "Kurzschluss" klassiert werden (z.B. 5% der Leerlaufspannung).

6. Verfahren nach einem der Ansprüche 2 bis 4, dadurch gekennzeichnet, dass die Erosionsimpulse in der Erfassungszeit (ET), deren Funkenstreckenspannung U_{FS} eine definierte Leerlauf-Schwellspannung U_{SL} überschreitet, als "Leerlauf" klassiert werden (z.B. 90% der Leerlaufspannung).

7. Verfahren nach einem der voranstehenden Ansprüche, dadurch gekennzeichnet, dass die Erosionsimpulse in der Erfassungszeit (ET) zur Herleitung der mittleren Zündverzögerungszeit T_{d} und/oder der mittleren Funkenstreckenspannung U_{FS} verwendet werden, und dieser Wert als Istwert für die Regelung des Erosionsprozesses eingesetzt wird.

8. Verfahren nach einem der voranstehenden Ansprüche, dadurch gekennzeichnet, dass die Regelung des Erosionsprozesses bei konstanter Erosionsfrequenz (Impulsfequenz fₚ) durch Regelung des Vorschubes erfolgt.

9. Verfahren nach einem der voranstehenden Ansprüche, dadurch gekennzeichnet, dass bei konstanter Vorschubgeschwindigkeit die Regelung des Erosionsprozesses durch Regelung der Erosionsfrequenz fₚ erfolgt.

10. Verfahren nach einem der voranstehenden Ansprüche, dadurch gekennzeichnet, dass der Algorithmus zur Regelung des Erosionsprozesses eine automatische Anpassung an jede Werkstückhöhe und Geometrie umfasst, die auf der Minimierung der Drahtbewegung zwischen Bearbeitungszeit (BT) und Erfassungszeit (ET) beruht.

11. Verfahren nach einem der voranstehenden Ansprüche, dadurch gekennzeichnet, dass der optimale Sollwert der mittleren Funkenstrecken-Spannung oder der mittleren Zündverzögerungszeit zur Regelung des Vorschubes oder der Erosionsfrequenz durch einen Algorithmus bestimmt wird, welcher die Kurzschlusszeit und die Leerlaufzeit minimiert.

12. Verfahren nach einem der voranstehenden Ansprüche, dadurch gekennzeichnet, dass zur Optimierung der Prozessregelung eine unscharfe Logik (Fuzzy) eingesetzt wird.

13. Vorrichtung für die elektroerosive Bearbeitung eines Werkstücks (2) mittels einer Drahtelektrode (1) in einem möglichst genauen Bearbeitungsprozess, gekennzeichnet durch:
- eine Steuerung (7) eines Pulsgenerators (9), welche so eingerichtet ist, dass die Bearbeitung intermittierend erfolgt, und welche weiter so eingerichtet ist, dass die Erosionsimpulse jeweils während Bearbeitungszeiten (BT) an den Arbeitsspalt (3) angelegt werden, und während dazwischen liegender Messzeiten (MT) Erosionsimpulse mit einer derart niedrigen Wiederholungsfrequenz angelegt werden, dass die Drahtelektrode (1) durch die rückführende Wirkung der Drahtspannung F_{W} während der Messzeit (MT) in seine Ruhelage strebt,
- eine Auswerteeinheit (4), die dabei eine etwaige Auslenkung der Drahtelektrode aus der Ruhelage, die während der vorausgegeangenen Bearbeitungszeit (BT) gegebenenfalls vorhanden war, im Mikrometerbereich erfassen kann, und
- einen Regler (4, 5, 6, 8), der hierauf beruhend den Bearbeitungsprozess regelt.

14. Vorrichtung nach Anspruch 13, dadurch gekennzeichnet, dass die Auswerteeinheit (4) so ausgebildet ist, dass sie Änderungen der Auslenkung der Drahtelektrode (1) erfasst, indem sie jeweils während der Messzeit (MT) durch die Auswertung des Funkenstrekkensignals (F) ein Mass für die Änderungen des Abstands Drahtelektrode-Werkstück gewinnt.

15. Vorrichtung nach Anspruch 14, dadurch gekennzeichnet, dass die Auswerteeinheit (4) so ausgebildet ist, dass sie als das Funkenstreckensignal (F) die mittlere Zündverzögerungszeit T_{d} oder die mittlere Funkenstreckenspannung U_{FS} verwendet.

16. Vorrichtung nach einem der Ansprüche 13 bis 15, dadurch gekennzeichnet, dass die Auswerteeinheit (4) so ausgebildet ist, dass sie die Erfassungszeit (ET) mit der Messzeit (MT) synchronisiert, und den Beginn der Erfassungszeit um eine Zeit (DT) verzögert.

17. Vorrichtung nach einem der Ansprüche 14 bis 16, dadurch gekennzeichnet, dass die Auswerteeinheit (4) so ausgebildet ist, dass sie die Erosionsimpulse in der Erfassungszeit (ET), deren Funkenstreckenspannung U_{FS} eine definierte Kurzschluss-Schwellspannung U_{SK} unterschreitet, als "Kurzschluss" klassiert (z.B. 5% der Leerlaufspannung).

18. Vorrichtung nach einem der Ansprüche 14 bis 17, dadurch gekennzeichnet, dass die Auswerteeinheit (4) so ausgebildet ist, dass sie die Erosionsimpulse in der Erfassungszeit (ET), deren Funkenstreckenspannung U_{FS} eine definierte Leerlauf-Schwellspannung U_{SL} überschreitet als "Leerlauf" klassiert (z.B. 90% der Leerlauf spannung).

19. Vorrichtung nach einem der voranstehenden Ansprüche, dadurch gekennzeichnet, dass die Auswerteeinheit (4) so ausgebildet ist, dass sie die Erosionsimpulse in der Erfassungszeit (ET) zur Herleitung der mittleren Zündverzögerungszeit T_{d} und/oder der mittleren Funkenstreckenspannung U_{FS} verwendet, und diesen Wert als Istwert für die Regelung des Erosionsprozesses einsetzt.

20. Vorrichtung nach einem der voranstehenden Ansprüche, dadurch gekennzeichnet, dass der Regler (4, 5, 6, 8) so ausgebildet ist, dass er den Erosionsprozess bei konstanter Erosionsfrequenz (Impulsfequenz fₚ) durch den Vorschubes regelt.

21. Vorrichtung nach einem der voranstehenden Ansprüche, dadurch gekennzeichnet, dass der Regler (4, 5, 6, 8) so ausgebildet ist, dass er bei konstanter Vorschubgeschwindigkeit den Erosionsprozess durch die Erosionsfrequenz fₚ regelt.

22. Vorrichtung nach einem der voranstehenden Ansprüche, dadurch gekennzeichnet, dass die Auswerteeinheit (4) so ausgebildet ist, dass sie den optimalen Sollwert der mittleren Funkenstrecken-Spannung oder der mittleren Zündverzögerungszeit zur Regelung des Vorschubes oder der Erosionsfrequenz durch einen Algorithmus bestimmt, welcher die Kurzschlusszeit und die Leerlaufzeit minimiert.

## Claims

1. A method for the electric discharge machining of a workpiece (2) by means of a wire electrode (1) in a most precise possible machining process,
characterised in that:
- machining takes place intermittently, the erosion pulses in each case being applied during machining time (BT) at the working gap (3), and during measurement times (MT) therebetween erosion pulses are applied with such a low repetition frequency that
- the wire electrode tends into its home position as a result of the restoring action of the wire tension F_{W} during the measurement time (MT),
and in that
- any deflections in the wire electrode from the home position which were possibly present during the preceding machining period (BT) can be detected in the micrometer range, and
- the machining process is regulated on the basis thereof.

2. A method according to Claim 1,
characterised in that the changes in the deflection of the wire electrode (1) are detected by a measure for the changes in the wire electrode-workpiece spacing being obtained during the measurement time (MT) by the evaluation of the spark gap signal (F), and the open-loop control of the erosion process takes place as a result thereof.

3. A method according to Claim 2,
characterised in that the spark gap signal (F) is the mean sparking delay time T_{d} or the mean spark gap voltage U_{FS}.

4. A method according to one of Claims 1 to 3,
characterised in that the data acquisition time (ET) is synchronised with the measurement time (MT), and the start of the data acquisition time is delayed by a period of time (DT) so that the wire electrode (1) has started a movement towards its home position.

5. A method according to one of Claims 2 to 4,
characterised in that the erosion pulses in the data acquisition time (ET), the spark gap voltage U_{FS} of which falls below a defined short-circuit threshold voltage U_{SK}, are classified as "short-circuit" (e.g. 5% of the open-circuit voltage).

6. A method according to one of Claims 2 to 4,
characterised in that the erosion pulses in the data acquisition time (ET), the spark gap voltage U_{FS} of which exceeds a defined open-circuit threshold voltage U_{SL}, are classified as "open-circuit" (e.g. 90% of the open-circuit voltage).

7. A method according to one of the preceding Claims,
characterised in that the erosion pulses are used in the data acquisition time (ET) for the derivation of the mean sparking delay time T_{d} and/or the mean spark gap voltage U_{FS}, and this value is used as the actual value for the regulation of the erosion process.

8. A method according to one of the preceding Claims,
characterised in that the regulation of the erosion process takes place at constant erosion frequency (pulse frequency fₚ) by regulating the feed.

9. A method according to one of the preceding Claims,
characterised in that the regulation of the erosion process takes place by the regulation of the erosion frequency fₚ at constant feed velocity.

10. A method according to one of the preceding Claims,
characterised in that the algorithm for the regulation of the erosion process comprises an automatic adaptation to each workpiece height and geometry, which is based on the minimisation of the wire movement between machining time (BT) and data acquisition time (ET).

11. A method according to one of the preceding Claims,
characterised in that the optimal set value of the mean spark gap voltage or of the mean sparking delay time is determined for the regulation of the feed or of the erosion frequency by an algorithm which minimises the short-circuit time and the open-circuit time.

12. A method according to one of the preceding Claims,
characterised in that fuzzy logic is used for the optimisation of the process regulation.

13. An apparatus for the electrical discharge machining of a workpiece (2) by means of a wire electrode (1) in a most precise possible machining process,
characterised by:
- an open-loop control (7) of a pulse generator (9), which is adjusted so that machining takes place intermittently, and which is also adjusted so that the erosion pulses are applied to the working gap (3) during machining times (BT), and during measurement times (MT) therebetween erosion pulses are applied at such a low repetition frequency that the wire electrode (1) tends into its home position as a result of the restoring action of the wire tension F_{W} during the measurement time (MT),
- an evaluation unit (4), which at the same time can detect any deflection of the wire electrode from the home position in the micrometer range which was possibly present during the preceding machining time (BT), and
- a regulator (4, 5, 6, 8) which regulates the machining process on the basis thereof.

14. An apparatus according to Claim 13,
characterised in that the evaluation unit (4) is designed so that it detects changes in the deflection of the wire electrode (1) by obtaining a measure for the changes of the wire electrode-workpiece spacing during the measurement times (MT) by the evaluation of the spark gap signal (F).

15. An apparatus according to Claim 14,
characterised in that the evaluation unit (4) is designed so that it uses the mean sparking delay time T_{d} or the mean spark gap voltage U_{FS} as the spark gap signal (F).

16. An apparatus according to one of Claims 13 to 15,
characterised in that the evaluation unit (4) is designed so that it synchronises the data acquisition time (ET) with the measurement time (MT), and delays the start of the data acquisition time by a time (DT).

17. An apparatus according to one of Claims 14 to 16,
characterised in that the evaluation unit (4) is designed so that it classifies the erosion pulses in the data acquisition time (ET), whose spark gap voltage U_{FS} falls beneath a defined short-circuit threshold voltage U_{SK}, as "short circuit" (e.g. 5% of the open-circuit voltage).

18. An apparatus according to one of Claims 14 to 17,
characterised in that the evaluation unit (4) is designed so that it classifies the erosion pulses in the data acquisition time (ET), whose spark gap voltage U_{FS} exceeds a defined open-circuit voltage U_{SL}, as "open circuit" (e.g. 90% of the open-circuit voltage).

19. An apparatus according to one of the preceding Claims,
characterised in that the evaluation unit (4) is designed so that it uses the erosion pulses in the data acquisition time (ET) to derive the mean sparking delay time T_{d} and/or the mean spark gap voltage U_{FS}, and uses this value as the actual value for the regulation of the erosion process.

20. An apparatus according to one of the preceding Claims,
characterised in that the regulator (4, 5, 6, 8) is designed so that it regulates the erosion process at constant erosion frequency (pulse frequency fₚ) by the feed.

21. An apparatus according to one of the preceding Claims,
characterised in that the regulator (4, 5, 6, 8) is designed so that at constant feed velocity it regulates the erosion process by the erosion frequency fₚ.

22. An apparatus according to one of the preceding Claims,
characterised in that the evaluation unit (4) is designed so that it determines the optimal set value of the mean spark gap voltage or of the mean sparking delay time for the regulation of the feed or of the erosion frequency by an algorithm which minimises the short-circuit time and the open-circuit time.

## Revendications

1. Procédé d'usinage par électroérosion d'une pièce à usiner (2) à l'aide d'une électrode en forme de fil (1) dans un processus d'usinage aussi précis que possible, caractérisé en ce que :
- l'usinage s'effectue d'une manière intermittente, des impulsions d'érosion étant appliquées à la fente de travail (3) respectivement pendant des durées d'usinage (BT), tandis que pendant des durées de mesure (24) situées entre ces impulsions, des impulsions d'érosion sont appliquées avec une fréquence de répétition suffisamment faible pour que
- l'électrode en forme de fil tende à venir dans sa position de repos pendant la durée de mesure (MT), sous l'effet de rappel produit par la tension R_{W}, et que
- d'éventuelles déviations de l'électrode en forme de fil à partir de la position de repos, qui étaient éventuellement présentes pendant la durée d'usinage (BT) précédente, peuvent être détectées dans la gamme du micromètre, et
- le processus d'usinage est réglé sur la base de ces déviations.

2. Procédé selon la revendication 1, caractérisé en ce que les variations de la déviation du fil en forme d'électrode (1) sont détectées par le fait que respectivement pendant la durée de mesure (MT), une mesure des variations de la distance électrode en forme de fil - pièce à usiner est obtenue par évaluation du signal (M) de la section de production d'étincelles, et la régulation du processus d'érosion est exécutée à partir de là.

3. Procédé selon la revendication 2, caractérisé en ce que le signal (F) de la section de production d'étincelles est la durée moyenne de retardement d'amorçage T_{d} ou la tension moyenne U_{FS} de la section de production d'étincelles.

4. Procédé selon l'une des revendications 1 à 3, caractérisé en ce que la durée de détection (ET) est synchronisée sur la durée de mesure (MT), et le début de la durée de détection est retardé d'une durée (DT) de telle sorte que l'électrode en forme de fil (1) a commencé un déplacement en direction de sa position de repos.

5. Procédé selon l'une des revendications 2 à 4, caractérisé en ce que les impulsions d'érosion, qui apparaissent pendant la durée de détection (ET) et pour lesquelles la tension U_{FS} aux bornes de la section de production d'étincelles tombe au-dessous d'une tension de seuil de court-circuit définie U_{SK}, sont classées en tant que "court-circuit" (par exemple 5 % de la tension de marche à vide).

6. Procédé selon l'une des revendications 2 à 4, caractérisé en ce que les impulsions d'érosion, qui apparaissent pendant la durée de détection (ET) et pour lesquelles la tension U_{FS} aux bornes de la section de production d'étincelles dépasse une tension de seuil à vide définie U_{SL}, sont classées en tant que "marche à vide" (par exemple 90 % de la tension de marche à vide).

7. Procédé selon l'une des revendications précédentes, caractérisé en ce que les impulsions d'érosion, qui apparaissent pendant la durée de détection (ET), sont utilisées pour l'obtention de la durée moyenne de retardement d'amorçage T_{d} et/ou de la tension moyenne U_{FS} aux bornes de la section de production d'étincelles, et cette valeur est utilisée en tant que valeur réelle pour la régulation du processus d'érosion.

8. Procédé selon l'une des revendications précédentes, caractérisé en ce que la régulation du processus d'érosion s'effectue à une fréquence d'érosion constante (fréquence d'impulsions fₚ) au moyen de la régulation de l'avance.

9. Procédé selon l'une des revendications précédentes, caractérisé en ce que, pour une vitesse d'avance constante, la régulation du processus d'érosion s'effectue par régulation de la fréquence d'érosion fₚ.

10. Procédé selon l'une des revendications précédentes, caractérisé en ce que l'algorithme pour la régulation du processus d'érosion comprend une adaptation automatique à chaque hauteur et à chaque géométrie de la pièce à usiner, qui est basée sur la réduction du déplacement du fil entre la durée d'usinage (BT) et la durée de détection (ET).

11. Procédé selon l'une des revendications précédentes, caractérisé en ce que la valeur de consigne optimale de la tension moyenne aux bornes de la section de production d'étincelles ou de la durée moyenne de retardement d'amorçage pour régler l'avance ou la fréquence d'érosion est déterminée au moyen d'un algorithme qui réduit la durée de court-circuit et la durée de marche à vide.

12. Procédé selon l'une des revendications précédentes, caractérisé en ce que pour optimiser la régulation du processus, on utilise une logique floue (fuzzy).

13. Dispositif pour l'usinage par électroérosion d'une pièce à usiner (2) à l'aide d'une électrode en forme de fil (1) dans un processus d'usinage aussi précis que possible, caractérisé par :
- une unité de commande (7) d'un générateur d'impulsions (9), qui est agencée de telle sorte que l'usinage s'effectue d'une manière intermittente, des impulsions d'érosion étant appliquées à la fente de travail (3) respectivement pendant des durées d'usinage (BT), tandis que pendant des durées de mesure (24) situées entre ces impulsions, des impulsions d'érosion sont appliquées avec une fréquence de répétition suffisamment faible pour que l'électrode en forme de fil tende à venir dans sa position de repos pendant la durée de mesure (MT), sous l'effet de rappel produit par la tension F_{W} du fil, et
- une unité d'évaluation (4) qui peut détecter une éventuelle déviation de l'électrode en forme de fil à partir de la position de repos, qui était éventuellement présente pendant la durée d'usinage (BT) précédente, peuvent être détectées dans la gamme du micromètre,
- un régulateur (4,5,6,8), qui règle le processus d'usinage sur la base de cette déviation.

14. Dispositif selon la revendication 13, caractérisé en ce que l'unité d'évaluation (4) est agencée de telle sorte qu'elle détecte des variations de la déviation de l'électrode (1) en obtenant une mesure des variations de la distance électrode en forme de fil - pièce à usiner respectivement pendant la durée de mesure (MT), au moyen de l'évaluation du signal (F) de la section de production d'étincelles.

15. Dispositif selon la revendication 14, caractérisé en ce que l'unité d'évaluation (14) est agencée de telle sorte qu'elle utilise en tant que signal (F) de la section de production d'étincelles, la durée moyenne de retardement d'amorçage T_{d} ou la tension moyenne U_{FS} aux bornes de la section de production d'étincelles.

16. Dispositif selon l'une des revendications 13 à 15, caractérisé en ce que l'unité d'évaluation (4) est agencée de telle sorte qu'elle synchronise la durée de détection (ET) sur la durée de mesure (MT) et retarde le début de la durée de détection, d'une durée (DT).

17. Dispositif selon l'une des revendications 14 à 16, caractérisé en ce que l'unité d'évaluation (4) est agencée de telle sorte qu'elle classe les impulsions d'érosion, qui apparaissent pendant la durée de détection (ET) et pour lesquelles la tension U_{FS} aux bornes de la section de production d'étincelles tombe au-dessous d'une tension de seuil de court-circuit définie U_{SK}, en tant que "court-circuit" (par exemple 5 % de la tension de marche à vide).

18. Dispositif selon l'une des revendications 14 à 17, caractérisé en ce que l'unité d'évaluation (4) est agencée de telle sorte qu'elle place les impulsions d'érosion, qui apparaissent pendant la durée de détection (ET) et pour lesquelles la tension U_{FS} aux bornes de la section de production d'étincelles dépasse une tension de seuil de marche à vide définie U_{SL}, en tant que "marche à vide" (par exemple 90 % de la tension de marche à vide).

19. Dispositif selon l'une des revendications précédentes, caractérisé en ce que l'unité d'évaluation (4) est agencée de telle sorte qu'elle utilise des impulsions d'érosion qui apparaissent pendant la durée de détection (ET) pour obtenir la durée moyenne de retardement d'amorçage T_{d} et/ou la tension moyenne U_{FS} aux bornes de la section de production d'étincelles et utilise cette valeur en tant que valeur réelle pour la régulation du processus d'érosion.

20. Dispositif selon l'une des revendications précédentes, caractérisé en ce que le régulateur (4,5,6,8) est agencé de telle sorte qu'il règle le processus d'érosion au moyen de l'avance, pour une fréquence d'érosion constante (fréquence d'impulsions fₚ).

21. Dispositif selon l'une des revendications précédentes, caractérisé en ce que le régulateur (4,5,6,8) est agencé de telle sorte qu'il règle le processus d'érosion au moyen de la fréquence d'érosion fₚ, pour une vitesse d'avance constante.

22. Dispositif selon l'une des revendications précédentes, caractérisé en ce que l'unité d'évaluation (4) est agencée de telle sorte qu'elle détermine la valeur de consigne optimale de la tension moyenne aux bornes de la section de production d'étincelles ou la durée moyenne de retardement d'amorçage pour la régulation de l'avance ou de la fréquence d'érosion au moyen d'un algorithme, ce qui réduit au minimum la durée de court-circuit et la durée de marche à vide.
